Europäisches Patentamt

European Patent Office

Office européen des brevets

(19)

(11) Publication number: **0 137 760**
**B1**

(12) # EUROPEAN PATENT SPECIFICATION

(45) Date of publication of patent specification: **15.03.89**

(51) Int. Cl.⁴: **G 11 B 7/26**

(21) Application number: **84306382.7**

(22) Date of filing: **19.09.84**

(54) Improved overcoat for optical recording media.

(30) Priority: **23.09.83 US 535172**

(43) Date of publication of application:
**17.04.85 Bulletin 85/16**

(45) Publication of the grant of the patent:
**15.03.89 Bulletin 89/11**

(84) Designated Contracting States:
**BE DE FR GB IT NL SE**

(56) References cited:
**EP-A-0 024 136**
**EP-A-0 037 607**
**EP-A-0 044 907**
**DE-B-2 702 660**
**GB-A-2 064 987**
**JP-A-57 070 694**

(73) Proprietor: **UNISYS CORPORATION**
**1, Burroughs Place**
**Detroit Michigan 48232 (US)**

(72) Inventor: **Ho, Wu-Jing**
**19355 Sherman Way**
**Reseda, CA 91355 (US)**

(74) Representative: **Kirby, Harold Douglas Benson et al**
**G.F. Redfern & Company Marlborough Lodge 14 Farncombe Road**
**Worthing West Sussex BN11 2BT (GB)**

Courier Press, Leamington Spa, England.

**Description**

The present invention relates to a novel information storage record, and more particularly to such a record including an information-layer adapted for optical data recording which has protective overcoat means and related coatings adapted to enhance service life and recording characteristics.

JP—A—57 070 694 discloses a data recording device comprising a fixed base, a recording medium formed on the base and a surface-protection film formed on the recording medium. The film is produced by applying a UV-hardenable coating containing epoxy resin modified with unsaturated carboxylic acid and curing the coating. The coating comprises the resin, a photopolymerization diluent and a polymerisation inhibitor. The film comprises a two layer structure of a hard film over a soft film.

WO 84/02421, which was not published at the date of the present Application, discloses an optical medium comprising a highly reflective aluminium layer, a relatively transparent polymer spacer layer and an optical recording layer. Overcoating structure is specified as a soft pad layer with a hard layer as an outer protective overcoat.

The present invention relates to a method of developing a hard acrylic outer seal coating to serve as a mechanical/chemical barrier on a recording structure provided on a disk support, information being recorded using radiation, and said coating comprising a first layer consisting of the polymerisation product of a coating formulation including at least one radiation-curable acrylated epoxy resin and also including a photo-initiator.

It is an object of the present invention to provide a formulation which results in a clear coating, i.e. one that is transparent at the contemplated read/write wavelengths.

The invention is characterised in that said photo-initiator comprises a material which is resistant to yellowing of the cured layer when used in combination with a diamino primer adapted to promote coating adhesion.

Brief description of the drawings

These and other features and advantages of the present invention will be appreciated by workers as they become better understood by reference to the following detailed description of the present preferred embodiments, these being considered in conjunction with the accompanying drawings, wherein like reference symbols denote like elements:

Fig. 1 provides a cross-sectional view of a recording medium embodiment exhibiting a construction in accordance with features of the present invention; and

Fig. 2 very schematically indicates a preferred method of applying overcoat material of the kind taught herein.

Fig. 3 is a view after the manner in Fig. 1 indicating a modified embodiment.

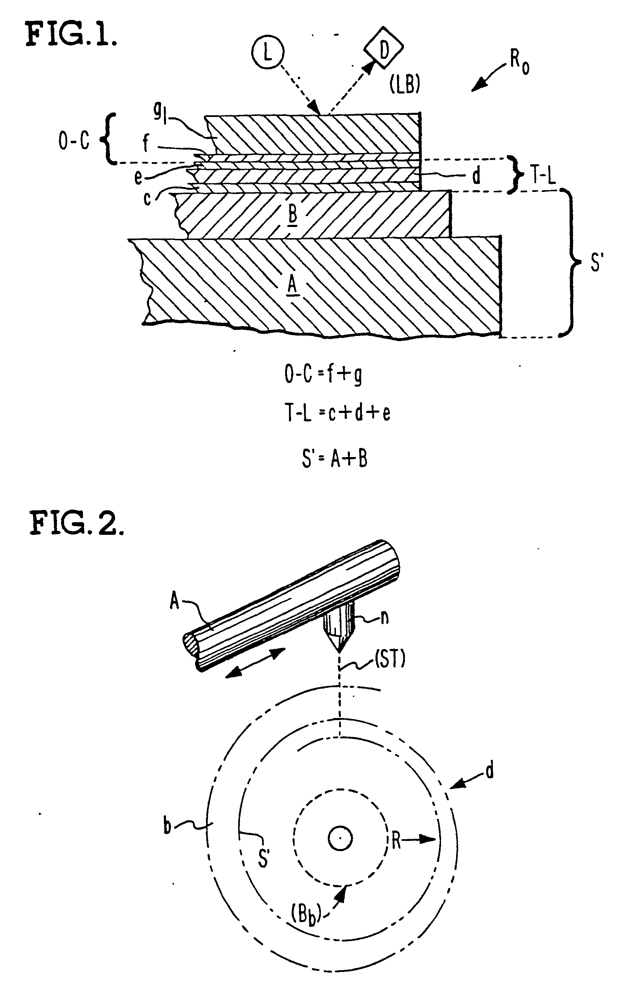

Exemplary OD recording —Example I (Fig. 1; tri-layer with "overcoat"):

Fig. 1 will be understood to (schematically and in idealized fashion) depict a fragmentary section of an optical data disk $R_D$, including a substrate disk A supporting a recording tri-layer T-L and overlying protective overcoat O-C. Disk $R_D$ will be understood as intended and adapted for recording by a known radiation source (Laser L) directing a beam (LB in phantom) at a tri-layer T-L so as to record certain bits therein—these to be "read" using prescribed associated detect (D), as known in the art.

The wavelength of the reading laser beam (LB of Fig. 1) is chosen so that unrecorded regions of the disk $R_D$ exhibit the desired anti-reflection condition, read-beam intensity will be kept low enough so as to not disturb the integrity of data recorded on the disk. Substrate A perferably comprises a relatively conventional magnetic recording disk with a smoothing layer B, applied thereon as necessary. Tri-layer T-L preferably comprises a transparent spacer layer d atop a reflector film c, with a suitable absorber or recording film e superposed on spacer d.

It will thus be understood that the reflected read-beam will be intensity-modulated by optically detectable changes at bits sites where data was recorded. Thus, the read beam will experience relatively high reflection when incident on a "bit" and relatively low reflection when incident on unwritten regions. Protective means O-C is a Hard/Soft composite overcoat chosen and arranged so that dust particles on its upper surface will be displaced far from the focal plane of the optical system (i.e., placed out of focus); and so have a negligible effect on the recording and reading operations.

It is conventionally assumed that, for the laser beam to "write" (i.e. "record" and produce an optically detectable disturbance in the reflectivity of the thin film absorber layer c) absorber film e, at any given bit-site, must be heated to a prescribed (minimum) write-temperature (Tw). The level of minimum temperature Tw is believed to depend on the properties of absorber c (e.g., on its thickness, metallurgy, microscopic structure, etc.) and also on the properties of subjacent spacer d, as well as upon "interface characteristics" between the spacer d and absorber e, and possibly between overcoat O-C and absorber e.

It will be found that a finite time is required for writing at a "bit site" (on which the writing laser beam is here assumed to be focused) to reach this requisite minimum "recording temperature" Tw. But while a "bit site" is being so heated, some of the applied heat is typically assumed to be escaping through underlying dielectric spacer d (also through O-C, possibly) and thus "wasted". To the extent such heat is lost, more time/energy are required to "write" of course, i.e., recording sensitivity is commensurately degraded. It is also believed that such heat-loss can reduce the quality of the recording and thereby reduce "recording density" for a given medium.

—"Soft pad" as "Tri-layer-Spacer"; preferred materials:

As an optimizing feature, it is preferred to use certain "soft pad" (e.g., fluorinated hydrocarbon polymer) as such a dielectric spacer layer d (Fig. 1). Such a "soft pad spacer" is believed to help reduce the loss of write-energy (i.e., less writing-energy escapes from the bit site).

Preferred materials are fluoro-ethylene polymer; another fluorinated polymers or copolymers; e.g., those commercially available under the name "Teflon", a trademark of DuPont. Such a fluorinated polymer can be deposited over the reflective layer c in a thin uniform layer as workers will understand.

—Preparation of Tri-layer T; (Fig. 1):

About 600—900 A° of a good archival reflector like gold (prefer about 600 A°, vapor-deposited) is applied as the reflector c atop an aluminum disk A, preferably smoothed properly with a subbing layer B as known in the art. Aluminum may replace gold where reduced cost is required and archivability can be compromised.

The reflector c may be so evaporated under high vacuum, in a large, batch-coating chamber with corresponding large coating distances and "double-rotation" of substrate etc., to better ensure uniformity. All dust and stains on parts should be reduced to a strict minimum, using rigorous "Clean Room" techniques.

The spacer d is similarly deposited atop reflector c. Under present practice spacer d serves as a dielectric material which is relatively transparent to the "working portion" of the laser spectrum. A one-quarter wave (of laser L) thickness of "soft pad" fluoropolymer is preferred, for the subject purposes (e.g., assume write/read at $\lambda = 6328$ A°; Note: from an optical standpoint, a spacer of thickness $t_s = \frac{1}{2}n\lambda_r$, will "disappear").

Absorber layer e may be understood to comprise an ultra-thin layer of gold which is vapor-deposited (thermally evaporated) in island form onto spacer layer d (on a relatively flat—$\leq 1/20\lambda$—record surface thereof—as contrasted with a more conventional absorber of tellurium—e.g., see "Optical Properties of Tellurium Films Used for Data Recording" by Ash and Allen, SPIE Proceedings, #222, 1980; and see "Design and Production of Tellurium Optical Data Disks" by Rancourt, SPIE Proceedings, #299, 1981; or see U.S. 4,222,071 or U.S. 4,334,299).

—Overcoat portion:

"Soft pad" coating f preferably consists of a convenient thickness (e.g., a few thousand A°) of a fluoropolymer (e.g., preferably and conveniently be the same material and deposition method as for spacer layer d). It is preferably formulated and deposited (on absorber e) as described above, most preferably being laid-down in the same overall deposition sequence; cf. with tri-layer T-L for convenience.

Where using the "tri-layer", it will be convenient to detect and control thickness with layer f being deposited as one or more half-waves. As workers will realize, a number of half-wave thicknesses will make the soft overcoating "disappear" optically, and thus not reflect read/write energy meant for the absorber layer (—this would reduce system efficiency).

"Soft pad" supercoating f will be sufficiently "soft" and yielding to maximize sensitivity, will be relatively non-porous, thermally insulative, with a relatively low specific heat, as well as being highly transparent to the contemplated R/W wavelengths ($\lambda_r$) as mentioned above. Also, it will bond firmly to the superposed "Hard" barrier layer, but couple rather loosely to the underlying absorber (e.g., which preferably will be relatively non-reactive with the "pad")—also a flash inter-coating can, of course, be used. It should also be chemically stable, compatible (not project contaminants in record $R_D$) and able to be matched thermally and mechanically to adjust layers (i.e., to absorber e and hard coat g). Ideally it will also be cost-effective and convenient to apply (e.g., with same deposition methods and equipment as layers c, d, e).

The above-described fluoropolymer material will be found to meet most, if not all, these stringent requirements (as summarized in Table I above), though other like materials (e.g., like plasma polymerized fluoropolymers) will be suitable in appropriate instances. And, when such "soft pads" sandwich an absorber on both sides, the "thermal-mechanical isolation" thus afforded will be recognized as exceptional.

Further treatment of "soft pad" overcoating f may be necessary to optimize its compatibility and bonding to contiguous coatings (e.g., to enhance adhesion of its exposed surface to the "hard" overcoating and/or to weaken its bond with the underlying absorber layer). For instance, it has been found that certain "promoters" applied to the exposed surface of such a "soft pad" are often preferable for enhancing the wetting, etc., of a hard overcoating g like the radiation-cured acrylics described below. Such a "promoter" can evidently reduce moisture absorption and raise the "surface energy" $E_s$ of the soft pad, and lower the "free energy" of the substrate/coating system. One may prefer to promote wetting and hydroxyl affinity providing related "polar groups" on a TFE or FEP soft pad surface (these increasing surface energy $E_s$; e.g., vs. other coatings which raise $E_s$). A methyl methacrylate, or MMA provides such a (compatible) polar group. One may deposit such a "polar strike" by plasma (branching) polymerization (e.g., for 10+ minutes in the case of MMA) or by plasma etching or the like. Alternatively, one may lower $E_s$ and favor coating of such a soft pad via a light transparent "strike" of metal or metal oxide (these raising $E_s$ and improving wetting). As a feature hereof, such "soft pad" supercoatings will be seen to give strong adhesion to a hard supercoat thereon, but be coupled relatively loosely to the underlying absorber layer.

The rest of the overcoating O-C on absorber e (i.e., the outer portion) is made up—according to a related feature hereof—of "Hard" overcoating layer g, comprised of the below-specified acrylic-epoxy. This serves not only to provide outer mechanical protection and the needed defocusing thickness (with pad f), but also serves as a good vapor barrier and anti-static surface. The preferred formulations for hard overcoat g and related preferred methods for preparing and applying such are detailed below.

The thickness of layer g will, to some extent, depend on the optical system used (e.g., correcting spherical aberration in the focusing objective may be involved); it has been found that thicknesses on the order of 200 micrometers are quite suitable for this embodiment.

—Results: (Ex. I, Fig. 1):

The "hard/soft" overcoat embodiment suggested above (with the acrylated epoxy as in Mix T-1 below, applied on the "soft pad" with underlying absorber, tri-layer, etc.) will be seen to give surprisingly good sensitivity (e.g., superior to analogous records where a thick $SiO_2$ overcoat overlays the absorber), as well as providing the other desired characteristics mentioned above (e.g., Table I).

The Hard/soft overcoating will be recognized by workers as superior to such common (non-composite) coatings as fused silica (e.g., reducing required write-energy, giving longer; better environmental stability and service—especially in respect to moisture uptake).

The "Hard" overcoat resulting not only combines well with the "soft pad" (e.g., bonding satisfactorily thereto); it also exhibits the usual properties expected of such a protective outercoat (e.g., hardness, abrasion resistance, non-tacky), be readily cleaned (e.g., of dust, oil, fingerprints), be clear and transparent to $\lambda_r$ and exhibit low permeability to contaminants like water vapor, oxygen, etc.

Such a Hard coat material is preferably applied by spin-coating (according to present good practice) or by other suitable techniques known to workers (e.g., in certain instances, spray-coating, dip-coating, flow-coating or curtain coating may be feasible alternatives). Radiation-cured acrylic-epoxy coatings like those detailed below will be understood as apt for most such instances.

—Other materials for Hard/soft overcoating:

Workers will understand that, in appropriate instances, other "soft pad" and/or "hard overcoat" materials may be used to effect some or all of the indicated functionality of the preferred embodiments here detailed. For instance, in certain instances the hard overcoat may take the form of a transparent pre-formed sheet of acrylic-epoxy—laminated onto the "soft pad" or vice versa—in some instances the "soft pad" may also serve as the adhesive for the Hard coat.

—Preferred "Hard overcoat" materials:

Expanding on the foregoing, we will next describe a family of materials which are especially, and surprisingly, apt for use in protective "Hard" overcoatings like those above discussed (i.e., as a supercoating over a "soft pad" on the OD disk of Fig. 1, etc.). Thereafter, we will describe a preferred novel associated technique for applying such "hard coating" material to an OD disk or like substrate.

Example I-A: ("Hard" coating for Ex. I; Preparation, application, curing):

This Example is intended to describe the preparation and characteristics of a preferred radiation-cured acrylic-epoxy hard coating mixture T-1 as applied to the Example I embodiment (on "soft-pad" supercoat overlying the absorber) and also to describe a general method of applying this to a substrate and then curing it in situ. Later, further details of a particular preferred method for applying this to a prescribed optical data disk will be described (see description below in connection with Fig. 2).

Workers will agree that the desired "Hard" outercoat for such optical disks should not only function as a protective layer (to protect the media from dust contamination and environmental degradation, etc.), but also should have other properties such as high optical transmission, minimum effect on sensitivity and S/N performance of the medium, UV-curable coatings are more acceptable for industrial applications than conventional thermal-cured coatings, e.g., because they have a faster cure cycle, less energy consumption and less environmental pollution (no problematic solvent emission). It should not attract dust (be static-free) should be very "clear" and highly transparent to R/W $\lambda$, very strong, somewhat flexible, adhere well to "soft pad" and not badly degrade optical R/W performance. It should have good mechanical integrity despite humidity/temperature cycling (e.g., not be brittle or easily fracture, not delaminate or curl due to internal stress) and have good abrasion-resistance.

In general, the UV curable coating here will comprise an unsaturated resin, unsaturated monomer and photoinitiator. The formulation of ingredients is "state of the art", but requires a complete understanding of the functions of the constituent parts and their function.

Working at room temerature and otherwise standard conditions, the following "Hard overcoat" prepolymer mixture T-1 is prepared, being intended for application as a "Hard" protective overcoating, about 175—250 mm (7—10 mils) thick, and having the described characteristics as uniformly spread and cured on a prescribed optical data disk surface.

This surface may be understood as comprising a properly-treated aluminum disk substrate (e.g., with smoothing pre-coat thereon) with a tri-layer optical recording matrix superposed thereon, followed by a plasma polymerized thin, "soft pad" supercoating (of "soft pad" fluoropolymer). Such a fluoropolymer is, thus, the substrate of choice here.

| Mix T-1 | Wt%-pref. | Approx. range |
|---|---|---|
| "Celrad 3701" (Acrylated epoxy resin) | 36 | 30—40 |
| TMPTA (Tri-acrylated monomer—for cross-linking) | 24 | 20—30 |
| 2-EhA (mono-acrylated monomer; to flexibilize) | 36 | 30—40 |
| FC-430 (Fluoro-carbon wetting agent) | 1 | 0.5—2 |
| I-184 (non-yellowing UV-initiator) | 2 | 1—4 |
| Z-6020 (clarifying adhesion-promoter) | 1 | 0.5—2 |

The Celrad 3701 (Celanese Corp.) will be understood to be an acrylated epoxide "basic" bulk-resin which is readily cured by ultraviolet light (as below) when properly initiated. This basic resin is selected to impart the desired strength and chemical stability to the cured coating over relatively extended service life; and because it very quickly and conveniently cures and yields fairly good clarity. Importantly, it allows relatively little moisture absorption. Also, like all the other constituents it is preferred here because it is generally low-cost, easy to formulate and apply, and because it yields the desired "archival" protective coating (as mentioned elsewhere).

The viscosity of Mix T-1 should be monitored least it become too thick and viscous to apply readily (see preferred spiral application technique below—e.g., mix must flow through a dispensing nozzle). Also, the cured coating should exhibit little or no water uptake lest it might later tend to swell and crack.

However, since 3701 can tend to discolor slightly over time, it should be used with additives that promote clarification and resist yellowing as noted below.

Workers will recognize that other like, low-viscosity co-monomers (or pre-polymer, low-viscosity diluents) may be substituted, adjusting viscosity accordingly. For instance, certain other Celrad formulations may be suitable in some instances. However, other common coating polymers are not feasible, for instance, acrylated urethane which is prone to cause "orange peel". And other like acrylated resins are not apt for substitution. For instance, Celrad 3200, another acrylated epoxide is apt to induce coating separation, delamination, cracking or fracture (is less viscous, with more flexibility and less tensile strength). And Celrad 1700 (acrylated acrylate) gives similar problems. And moisture-intrusion and shrinkage can be reduced by adding a saturated resin (e.g., a derivative of polystyrene like polyvinyl acetate).

The trimethyl-ol propane triacrylate (TMPTA) is a trifunctional acrylate monomer, serving to promote cross-linking in this mixture. Other like (acrylate) cross-linking agents might be substituted, such as (trimethyl-ol trimethacrylate). Some such cross-linker will usually be used—to enhance coating strength, etc., as workers well know—preferably (another acrylate cross-linker).

Elimination of TMPTA or the Celrad (without replacing by equivalents) will tend to soften the cured overcoat and reduce shrinkage.

The 2-ethylhexyl acrylate (2-EHA, Celanese Corp.) is a mono-functional acrylate monomer, supplemental to the "3701" and added, here, to improve flexibility of the final polymer coat. Workers will recognize that other such diluents may be substituted such as isodecyl acrylate or styrene.

The "Irgacure 184" ("I-184"; Ciba Geigy) is a photoinitiator apt for such (UV) curing of such a mixture. This UV-initiator is found surprisingly (possibly uniquely) apt for such purposes, especially because it is surprisingly resistant to discoloration (yellowing) of the cured overcoat (e.g., when used in such a mixture as T-1, including Z-6020 as discussed below).

This is especially surprising because such discoloration (yellowing) does result when a closely-similar compansion UV-initiator Irgacure #651 (by Ciba-Geigy also) replaces the Irgacure #184 (possibly because #651 has more unsaturated bonds and/or might include quinonidal end-groups; cf. #184: α hydroxy-cyclo hexyl phenone; #651: 2,2-dimethoxy-2-phenyl acetophenone).

The Z-6020 (by Dow Corning) is a diamino primer added to T-1 to promote coating adhesion (to "soft pad" substrate) and also to clarify the coating (reduce "yellowing" or amber color otherwise resulting).

This clarification is somewhat unexpected. The "yellowing" mechanism is not fully understood; hydroxyl groups may play a role.

For instance, replacement of Z-6020 with another conventional adhesion-promoter, (Z-6040 or Z-6030 are good), leaves the T-1 coating subject to yellowing.

Thus, it will be understood as critical to the desired results to employ an initiator like I-184 and an adhesion promoter like Z-6020.

Mix T-2

By contrast, elimination of Z-6020 in T-1 and replacement of I-184 with the mentioned I-651 yielded a coating (T-2) that exhibited decided "yellowing" under (ambient) conditions; also toughness was inferior. Viscosity was about 110 cp at 25°C, density 1.07 gm/cc.

Mix T-3

Now, replicating Mix T-2, but replacing I-651 with I-184, reduces the yellowing, but still leaves the coating with a light amber tone. This coating is tougher than that of T-2. A thickness of about 10 mils gave transmission of as high as 92.4% at 6328 A°.

Mix T-1

Now, adding Z-6020 to Mix T-3 to produce T-1, essentially eliminates all discoloration leaving a very clear, transparent coating).

This "promoter" (Z-6020) is believed to react with the moisture and hydroxyl groups in the mix solution. I believe it removes the amber colorant of the hydroxyl group. Tests indicate this T-1 film has much stronger adhesion to the substrate and maintains good flexibility, (after being in the environmental chamber for 50 hours at 70°C and 80% R.H., this film did not show any crack or delamination on the tri-layered disk).

That is, a disk with an overcoat film made with T-1 mix will pass severe environmental testing conditions (MIL-STD-810C). It can be placed in a chamber with conditions of 70°C and 80% R.H. for 50 hours and will show no visible delamination or cracks at all.

The "FC-430" is a fluoropolymer "surfactant" additive (by 3M Co.) characterized as a "non-ionic surfactant" for organic polymeric coating systems. It is added to promote good wetting, leveling and spreading functions and as a flow control agent, being adapted for reducing surface tension of certain coatings on certain substrates. It is promoted as being very non-reactive and as compatible with water-based or solvent-based systems (and with most polymers). "FC-430" might, with certain adjustments, be replaced by a like surfactant such as zonyl FSN by DuPont.

The Mixture T-1 should be "viscosity adjusted" to optimize spreading and disk application; here, final viscosity should be about 41 cp (25°C, density: 1.07 gm/cc), given the subject ambient conditions (room temperature, fluoropolymer substrate surface, etc.).

The T-1 formulation (and similar mixtures) is quite tolerant of any number of other additives of widely varying chemistry; so, where appropriate, these may be added (e.g., an anti-static agent).

—Curing:

With the material spread evenly across the subject disk (fluoropolymer) surface and essentially all oxygen driven-off (e.g., by $N_2$ or like inert pre-flush, etc., as detailed below), the coating is photo-cured by exposure to ultraviolet light for a few minutes while the disk is slowly rotated. This renders a good fully-cured "hard" overcoating (no supplemental heat needed, no aging time necessary for complete polymerization).

More particularly, and preferably, a nitrogen pre-flush is invoked (e.g., for about 1 minute to drive off all oxygen); then exposure, under nitrogen, to UV for about 3—5 minutes, or sufficient to cure the coating as desired. Preferably, this is done while slowly rotating the disk (e.g., 20 rpm; note: the preferred UV beam falls mostly in λ 0.3 to 0.4 μm. range, with intensity varying with λe.g., 50 mW/cm² for 3.5 minutes at .366 μm.—longer if less initiator is used).

Radiation-curing is preferred over other (superficially-related) methods. For instance, thermal curing is unduly complex and hard to control; also it uses more energy and introduces solvent pollution risks.

—Results:

Mixture T-1, when so applied on a disk, (fluoropolymer surface) and so cured, will be seen to provide a hard clear protective coating, essentially satisfying all of the mentioned subject requirements; e.g., resisting moisture intrusion (and associated swell-cracking, shrinkage), with fine optical clarity and exhibiting good scratch resistance, while being easily surface cleaned.

Moisture resistance was particularly surprising and impressive—e.g., though not 100% impermeable, this hard coat will exhibit no swell-cracking even after extended immersion in water. Similarly, the hard overcoat has been observed to withstand extended extreme temperature/humidity cycling (e.g., from room temperature to 140°C and from about 40% humidity up to 80% humidity, for many weeks).

Further, this Hard outer-coating will be observed to exhibit extended stability—e.g., withstanding extended exposure to a rather extreme temperature/humidity cycling. This "stability" and associated toughness, etc., is believed to derive from the relatively cross-linked, long-chain polymer (epoxy) groups produced.

Also, this hard coat adheres (satisfactorily) to the fluoropolymer "soft pad", as is desired. Such adhesion might not result where the hard coat and/or the "soft pad" were changed—in such a case, a separate intermediate compatible (e.g., fully transparent) "adhesive inter-layer" might be called-for; however it is disfavored (e.g., it complicates thickness control).

Example II

Example I is repeated, except that proportions are modified as below (Mix T-4); otherwise it is similarly formulated, applied and cured.

| Mix T-4 | Parts by wt. |
|---|---|
| Celrad 1700 | 17 |
| Celrad 3200 | 17 |
| TMPTA | 32 |
| 2-EHA (ethylhexyl acrylate) | 31 |
| FC-430 | 1 |
| Darocur 1173 (vs. I-184) | 2 |
|  | 100 |

—Results:

The results were essentially like those in Example I, except that the overcoat was more brittle and more prone to moisture intrusion and "swell-cracking". Compared with T-1, this mix gave a coating with much less ultimate tensile strength (e.g., ~2000 psi; vs. about 4000 psi with T-1).

Example III

Another alternative Mix, T-5, is formulated, applied and cured as with T-1.

| Mix T-5 | Parts by wt. |
|---|---|
| RDX-52225 | 39 |
| TRPGDA (Celanese) | 39 |
| N-VP (GAF) | 14 |
| Methyl diethanolamine | 3 |
| Irgacure 651 | 5 |
|  | 100 |

—Results:

Essentially as with T-1, except for improved surface hardness, but with orange peel on the surface.

—Disfavored formulations:

Somewhat surprisingly, certain similar "radiation-cured acrylic" mixtures do not seem practical and are disfavored for the instant purposes. For instance, a formulation like Mix T-6 below will not be sufficiently clear and transparent (at the contemplated 0.4—0.8 µm, wavelengths).

Mix T-6

Mix T-1 is replicated, except that Z-6030 replaces the Z-6020 "adhesion promoter".

—Results:

Clarity badly impaired, Z-6020 evidently incompatible with the other ingredients.

—Coating methods:

Following are examples of novel techniques for depositing "hard coating" mixtures like those in the foregoing Examples onto OD disk substrates (like fluoropolymer) to yield an outer protective overcoat thereof—especially one that is several mils thick, yet highly-uniform, is radiation-cured in situ, giving the mentioned environmental and other protection for such a disk over a prescribed extended life. Workers will recognize that these techniques emphasize convenient, cost-effective methods of coating and curing, with very close control of thickness, and thickness uniformity.

While the subject coating is applied to give a highly uniform thickness of about 7 mils, workers will appreciate that thicknesses of up to about 20 mils can be satisfactorily rendered.

Workers will recognize that "hard coat formulations" like those described are quite apt for a "spiral" method of application (e.g., to an OD disk, as below) according to another feature hereof, such material

7

leading itself to such surprising simplicity and ease of dispersing, yet under close control and yielding the described surprisingly precise control of thickness uniformity.

Formulation T-1 will now be understood as to be applied to the OD disk surface f in Fig. 1 in a certain preferred spiral fashion. This will be understood as an aluminum disk on which the described tri-layer optical recording structure has been applied and, over this, a layer of fluoropolymer (or of a like "soft pad" polymeric surface).

In general, the method will be seen as involving the deposition of the coating material on the prescribed (fluoropolymer) disk surface in a prescribed number of spiral rows, or "beads" so the beads are spread out, or "leveled" into a very smooth, very uniform coating; and thereafter curing and hardening this coating to render the desired "Hard" protective overcoat. Some particular and preferred forms of this application method will now be described.

Example M-1: Application of T-1 of fluoropolymer substrate:

Step #1: Mix preparation:

A preferred form of the novel coating method will now be described wherein a preferred Hard coating mix (preferably T-1 described above), will be understood as selected, prepared and disposed for application to the disk in a spiral row of uniform symmetrical "beads", being thereafter "leveled" by a prescribed wetting (to induce a rapid, highly-uniform "leveling" of the beads on the prescribed surface) with the disk contemporaneously rotated slowly—i.e., just fast enough to induce inter-merging of adjacent beads.

Step #2: Dispense as "Spiral Beads":

More particularly, and with illustrative reference to Fig. 2, Mix T-1 will be supplied as known by workers to a prescribed controlled-rate dispensing means n (like a syringe-nozzle n, as workers know) affixed on a reciprocable arm A. Nozzle n is adapted and controlled (by known means) to dispense a prescribed, carefully-controlled, uniform stream st of the mix down onto the receiving (fluoropolymer) surface on the subject disk d at a constant rate. Thewhile arm A will be understood as to be continuously shifted radially (inward) of disk d, carefully controlled so that this stream st moves radially of disk d while the disk rotates whereby to describe the specified spiral SR (e.g., arm A translated by a linear motor as with magnetic recording heads—maintaining uniform separation, and size, of the beads). Disk rpm may also be varied, as necessary, (see below). As workers will appreciate, one may vary one or several of the three variables of: disk rpm, arm velocity and dispensing rate, while keeping the other variables constant—to deliver uniform size beads.

Thus, nozzle n is controllably swept across a prescribed radius of disk d, as the disk is rotated, deploying mix in the continuous uniform spiral SR (of "bead" segments b being of uniform separation, size and shape, as workers in the art will appreciate). The Mix may be supplied to nozzle n via a known syringe pump (not detailed), arranged to dispense at a prescribed rate to form such a spiral (e.g., at 1—3 gm/min. yielding about 40 beads across a 3.5" radial band $B_b$.

Control of mix viscosity is found to be very important to get good distribution and uniform settling.

Care should be taken to avoid "holidays" or "pinholes" (voids where little or no solvent condenses, giving a different "wetting" there or none at all—note: increased ambient temperature seems to enlarge such voids, probably because too much solvent evaporates too fast).

Step #2-A: bead-leveling:

The technique of applying such a precisely-uniform polymer coating (thickness of 170+10 μm) on a fluoropolymer surface is difficult. The following procedure is a preferred method of overcoating via a spinning technique. The spinning process includes the dispensing of coating solutions on a spinning substrate followed by leveling and curing. To have a uniform coating we dispense the exact amount of coating solution at low spin speed (preferably 4—16 rpm here) on the substrate surface in a spiral fashion. It is important that this coating solution properly "wet" this substrate surface; this is controlled by the viscosity and the surface tension of the coating solution and by the surface tension of the substrate surface material, as well as by outward-spreading forces (the effect of the centrifugal force induced by spinning the disk-substrate).

The coating beads on each track will be laid down so as to "just barely" touch one another and thus wet the entire surface. Thewhile, spinning rpm should be carefully controlled such that the coating solution will not move radially-outward appreciably (under the influence of centrifugal force) yet so the surface tension forces and centrifugal force will overcome the retarding coating viscosity and thus spread the coating solution uniformly.

Because the surface tension of a fluoropolymer is quite low, such an applied coating solution is apt to "wet" only very slowly. To improve and accelerate such wetting, we maintain a relatively low flow-rate (from the dispensing syringe), with a relatively high spinning rpm during dispensing—leading to a relatively large number of relatively "thin" beads (spiral track) on the substrate, with adjacent beads kept tangent to one another and the substrate so-wetted more quickly and completely (across its entire surface).

The dispensing rate may be kept, for instance, at a constant 1 gr./min. to 3 gr./min. One possible problem is that the flow stream (bead spiral) will not be continuous unless the syringe tip is kept relatively close to the (disk) substrate. Thus, to render a continuous spiral track using a tip with .033" ID, one must keep this distance between the tip and the coating surface to about 170—250 μm. The tip can now help spread-out the dispensed drops and level them. This was observed to work quite successfully.

The dispensing tip was translated radially (i.e., relatively to the center of the spinning substrate) so as to lay down enough beads (tracks) to cover the entire surface. In addition to so controlling radial translation speed, disk rpm (spinning speed) was also varied relatively continuously from 4 rpm at the OD to 11 rpm at the ID (so the tangential velocity will be for all tracks, from outside to inside radially) this prevents from "oversplitting".

Step #3: Cure:

After the entire substrate is so covered with coating, the disk is preferably spun-up to enhance (facilitate, accelerate) leveling (here about 4 rpm for about 7 minutes is satisfactory). The coating may then be cured; e.g., 3 minutes under ambient (UV) conditions; then another 3 minutes UV exposure under a $N_2$ environment. Such an initial "air-cure" (first 3 min.) is preferred to avoid "wrinkling". We find, surprisingly, that if the initial UV cure takes place in an $N_2$ atmosphere, the top of the coating is apt to retard penetration of the shorter wavelengths and become "wrinkled"—evidently because its "base" then cures less (or more slowly—e.g., it may remain "fluid" longer).

With leveling complete and the coating thus evenly distributed across the face of disk d, it will now be cured, in situ, (and otherwise treated) to yield the desired hard protective overcoating. Thus, disk rotation may cease and the disk to subjected to curing conditions—preferably without moving it from the "coating station", lest coating uniformity be disturbed or contaminants be introduced (e.g., dust settle on the now-tacky surface).

UV curing may be invoked at a curing station. That is, with the material evenly spread across the subject disk surface, the coating is photo-cured by exposure to ultraviolet light "under air"; then under an inert atmosphere (e.g., $N_2$ flush to expel all oxygen) until the coating is properly cured and "hard". We find about 3 minutes total exposure to 0.3—0.4 μm UV (e.g., 50 mW/cm² intensity at .366 μm) "in air"; then a like exposure "under $N_2$" is quite satifactory.

Alternatively, workers will understand that other like curing methods (e.g., other radiation) may be used in certain instances, with appropriate adjustments (e.g., of the type, concentration of photoinitiator).

—Results:

As mentioned before, the thickness uniformity is quite excellent (on the order of ±168—182 μm. over a 3.5" band for a "nominal 7 mil" coating is impressive, especially in view of the simplicity of the application apparatus and the type of coating mixture involved). As mentioned, the cure times and temperatures are quite convenient, as are the rest of the treatment conditions.

—Example M-2 ($SiO_2$ flash on fluoropolymer):

Whatever bead application technique is used, it may be advisable to pre-treat the substrate as suggested elsewhere to enhance wetting, adhesion and related characteristics. For instance, in Example M-1 above, or a modification thereof, one may wish to enhance the hydrophilicity of the substrate and the wetting thereof of the T-1 beads. In such a case, we have found it advantageous to apply or etch a very transparent "flash" coating of $SiO_2$ on the fluoropolymer prior to applying the beads (of T-1 or the like, cf. $SiO_2$ on layer f of Fig. 1). Alternatively the flash coating may consist of $Al_2O_3$ or $MgF_2$.

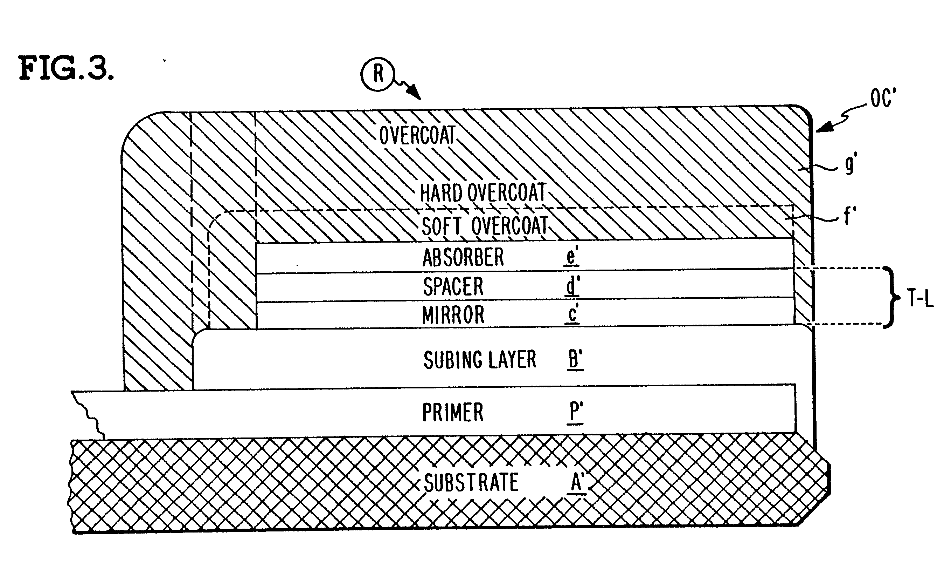

—"Encapsulated" record, Fig. 3:

Fig. 3 depicts a modified record R' in the manner of Fig. 1 and with all elements thereof identical (prime-designation) in structure, material and fabrication to $R_D$ except as otherwise stated. Here, the substrate disk A' is smoothed with a primer coat P' and subbing layer B', on which a mirror layer c' is laid, with a spacer d' atop mirror c' and absorber layer e' atop the spacer. A similar Hard/Soft overcoat OC' is applied atop the absorber e', except that it is made to surround and "encapsulate" the sensitive layers and so enhance archival life. Thus, soft pad coating f' extends beyond the recording tri-layer T-L' and along the exposed periphery of layers e', d', c' (protectively sealing the outer edges and interfaces thereof) to bond with the radially extended outer portion of subbing B'. In like fashion, Hard overcoat layer g' is preferably extended radially beyond soft layer f' and subbing B', and down along their outer peripheral edges—sealingly—to bond with extended outer portions of disk A', or primer P' thereon.

**Claims**

1. A method of developing a hard acrylic outer seal coating (OC) to serve as a mechanical/chemical barrier on a recording structure (T-L) provided on a disk support (S), information being recorded using radiation, and said coating comprising a first layer consisting of the polymerization product of a coating formulation including at least one radiation-curable acrylated epoxy resin and also including a photo-initiator, characterised in that said photo-initiator comprises a material which is resistant to yellowing of the cured layer (g) when used in combination with a diamino primer adapted to promote coating adhesion.

2. A method according to Claim 1, characterised in that said photo-initiator material is a hydroxy-cyclo hexyl phenone.

3. The method as recited in Claim 1 or Claim 2, wherein said adhesion-promoter is selected and adapted to assist in clarifying the resultant coating.

4. The method as recited in Claim 3, wherein the adhesion-promoter is selected and adapted to include moieties acting to so clarify the coating by combining with aqueous and/or other hydroxyl groups.

5. The method as recited in any of the preceding Claims, wherein a second layer (f) consisting of fluoro-polymer is provided on the recording structure (T-L) and said coating formulation spread over the second layer (f) includes a compatible wetting agent.

6. The method as recited in Claim 5, wherein the fluoro-polymer layer is etched or is covered with a light adhesion-promoting, hydroxy-affinity film adapted to enhance wetting of said coating formulation as applied thereon.

7. The method as recited in Claim 6, wherein said film comprises either a metal or a metal oxide, or a deposit including polar groups.

8. The method as recited in Claim 6, wherein said film comprises $SiO_2$ or $Al_2O_3$ or $MgF_2$.

9. The method as recited in Claim 8, wherein the recording surface is comprised of a fluoro-polymer deposit.

10. The method as recited in any of the preceding Claims, wherein said coating formulation includes cross-linking moieties and sufficient saturated resin to yield superior moisture resistance and shrink resistance.

11. The method as recited in Claim 10, wherein said saturated resin comprises a polystyrene or polystyrene derivative.

12. The method as recited in Claim 10, wherein the coating formulation also includes a compatible wetting agent and a cross-linking monomer comprised of a tri-functional acrylate.

13. The method so recited in Claim 12, wherein the coating formulation also includes a compatible diluent and/or flexibilizer.

14. The method as recited in Claim 13, wherein the coating formulation includes a flexibilizing acrylate monomer.

15. The method as recited in Claim 14, wherein said coating formulation is so-effected and said UV exposure is such as to quickly cross-link and polymerize the coating "in situ" and relatively completely without raising its temperature above about 70°—80°C.

16. The method as recited in Claim 15, wherein said coating formulation and UV exposure are such as to enable such curing within a few minutes or less for a coating thickness on the order of a few mils (25 μm) to a few dozen mils.

17. The method as recited in Claim 16, wherein the coating formulation and UV exposure are such as to enable such curing, with initial UV cure taking place "in air", then later, in an inert atmosphere, such as to avoid serious "wrinkling".

**Patentansprüche**

1. Verfahren zur Ausbildung einer harten äußeren Acryl-Schutzschicht (OC), die als mechanisch/chemische Barriere auf einer Aufzeichnungsstruktur (T-L) dient, welche auf einem scheibenförmigen Träger (S) vorgesehen ist, wobei Informationen unter Verwendung von Strahlung aufgezeichnet werden, und wobei die Schutzschicht eine erste Schicht umfaßt, die aus dem Polymerisationsprodukt einer Beschichtungsformulierung besteht, welche wenigstens ein durch Betrahlung härtbares arcyliertes Epoxydharz und außerdem einen Photoinitiator enthält, dadurch gekennzeichnet, daß der Photoinitiator ein Material umfaßt, welches gegenüber Gelbfärbung der gehärteten Schicht (g) resistent ist, wenn es in Kombination mit einer Diamino-Grundierung verwendet wird, die zur Förderung der Anhaftung der Schutzschicht ausgelegt ist.

2. Verfahren nach Anspruch 1, dadurch gekennzeichnet, daß das Photoinitiatormaterial ein Hydroxy-Cyclohexylphenon ist.

3. Verfahren nach Anspruch 1 oder 2, bei dem das Anhaftungs-Förderungsmittel so gewählt und ausgelegt ist, daß es zum Klarwerden der sich ergebenden Schutzschicht beiträgt.

4. Verfahren nach Anspruch 3, bei dem das Anhaftungs-Förderungsmittel so gewählt und ausgelegt ist, daß es Gruppen einschließt, die zu diesem Klarwerden der Schutzschicht durch Inverbindungtreten mit wässrigen und/oder anderen Hydroxylgruppen wirken.

5. Verfahren nach einem der vorstehenden Ansprüche, bei dem eine zweite Schicht (f), die aus Fluoropolymer besteht, auf der Aufzeichnungsstruktur (T-L) vorgesehen ist und bei dem die über die zweite Schicht (f) ausgebreitete Beschichtungsformulierung ein verträgliches Benetzungsmittel einschließt.

6. Verfahren nach Anspruch 5, bei dem die Fluoropolymerschicht geätzt oder mit einem leichten, die Anhaftung fördernden hydroxyaffinen Film bedeckt ist, der zur Benetzungsverstärkung der Beschichtungsformulierung bei deren Auftrag ausgelegt ist.

7. Verfahren nach Anspruch 6, bei welchem der Film entweder ein Metall oder ein Metalloxid oder einen polare Gruppen enthaltenden Auftrag umfaßt.

8. Verfahren nach Anspruch 6, bei dem der Film $SiO_2$ oder $Al_2O_3$ oder $MgF_2$ umfaßt.

# EP 0 137 760 B1

9. Verfahren nach Anspruch 8, bei dem die Aufzeichnungs-Oberfläche aus einem Fluoropolymerauftrag besteht.

10. Verfahren nach einem der vorstehenden Ansprüche, bei dem die Beschichtungsformulierung quervernetzende Gruppen und genügend gesättigtes Harz einschließt, um überlegene Feuchtigkeitsbeständigkeit und Schrumpfbeständigkeit zu ergeben.

11. Verfahren nach Anspruch 10, bei dem das gesättigte Harz ein Polystyrol oder Polystyrolderivat umfaßt.

12. Verfahren nach Anspruch 10, bei dem die Beschichtungsformulierung außerdem ein verträgliches Benetzungsmittel und ein Quervernetzungs-Monomer umfaßt, welches aus einem tri-funktionalen Acrylat besteht.

13. Verfahren nach Anspruch 12, bei dem die Beschichtungsformulierung außerdem ein verträgliches Verdünnungsmittel und/oder einen Flexibilisator einschließt.

14. Verfahren nach Anspruch 13, bei dem die Beschichtungsformulierung ein flexibilisierendes Acrylatmonomer einschließt.

15. Verfahren nach Anspruch 14, bei dem die Beschichtungsformulierung so ausgelegt und die UV-Bestrahlung so gewählt ist, das die Beschichtung schnell "in situ" und relativ vollständig quervernetzt und polymerisiert wird, ohne ihre Temperatur über ungefähr 70° bis 80° anzuheben.

16. Verfahren nach Anspruch 15, bei dem die Beschichtungsformulierung und die UV-Bestrahlung so gewählt sind, daß sie die Aushärtung innerhalb weniger Minuten oder weniger bei einer Beschichtungsdicke von der Größenordnung einiger weniger Mils (25 µm) bis zu einigen wenigen Dutzend Mils ermöglicht.

17. Verfahren nach Anspruch 16, bei dem die Beschichtungsformulierung und die UV-Bestrahlung so gewählt sind, daß sie eine Aushärtung gestatten, bei der eine anfängliche UV-Härtung "in Luft" und dann nachfolgend in einer inerten Atmosphäre stattfindet, um ernsthafte "Fältchenbildung" zu vermeiden.

## Revendications

1. Procédé de développement d'un revêtement d'étanchéité extérieur acrylique dur (OC) destiné à servir de barrière mécanique/chimique sur une structure d'enregistrement (T-L) formée sur un disque de support (S), l'information étant enregistrée en utilisant un rayonnement, et le revêtement comprenant une première couche constituée par le produit de polymérisation d'une élaboration de revêtement comprenant au moins une résine époxy acrylatée durcissable au rayonnement, ainsi qu'un photo-initiateur, procédé caractérisé en ce que le photo-initiateur est consituté d'un matériau résistant au jaunissement de la couche traitée (g) lorsqu'il est utilisé en combinaison avec un apprêt diaminé destiné à promouvoir l'adhérence du revêtement.

2. Procédé selon la revendication, caractérisé en ce que le matériau photo-initiateur est une hydroxy-cyclohexylphénone.

3. Procédé selon l'une quelconque des revendications 1 et 2, caractérisé en ce que le promoteur d'adhérence est sélectionné et conçu pour rendre le revêtement obtenu plus clair.

4. Procédé selon la revendications 4, caractérisé en ce que le promoteur d'adhérence est sélectionné et conçu de manière à comprendre des moitiés servant à clarifier le revêtement en se combinant avec des groupes aqueux et/ou autres groupes hydroxyles.

5. Procédé selon l'une quelconque des revendications précédentes, caractérisé en ce qu'une seconde couche (f) constituée d'un polymère fluoré est utilisée sur la structure d'enregistrement (T-L), et en ce que l'élaboration du revêtement étalé sur la seconde couche (f) comprend un agent mouillant compatible.

6. Procédé selon la revendication 5, caractérisé en ce que la couche de polymère fluoré est attaquée ou recouverte par un léger film de promotion d'adhérence à affinité hydroxyde destiné à renforcer le mouillage de la formule de revêtement lorsqu'elle est appliquée sur celui-ci.

7. Procédé selon la revendication 6, caractérisé en ce que le film est constitué, soit par un métal, soit par un oxyde métallique, soit par un dépôt comprenant des groupes polaires.

8. Procédé selon la revendication 6, caractérisée en ce que le film est constitué de $SiO_2$ ou de $Al_2O_3$ ou de $MgF_2$.

9. Procédé selon la revendication 8, caractérisé en ce que la surface d'enregistrement est constituée par un dépôt de polymère fluoré.

10. Procédé selon l'une quelconque des revendications précédentes, caractérisé en ce que la formule d'élaboration du revêtement comprend des parties de liaisons croisées et suffisamment de résine saturée pour donner une résistance supérieure à l'humidité et une résistance supérieure au rétrécissement.

11. Procédé selon la revendication 10, caractérisé en ce que la résine saturée est constituée d'un polystyrène ou d'un dérivé de polystyrène.

12. Procédé selon la revendication 10, caractérisé en ce que la formule d'élaboration du revêtement comprend également un agent mouillant compatible et un monomère à liaisons croisées constitué d'un acrylate tri-fonctionnel.

13. Procédé selon la revendication 12, caractérisé en ce que la formule d'élaboration du revêtement comprend également un diluant compatible et/ou un agent d'assouplissement en flexion.

11

14. Procédé selon la revendication 13, caractérisé en ce que la formule d'élaboration du revêtement comprend un monomère acrylate d'assouplissement en flexion.

15. Procédé selon la revendication 14, caractérisé en ce que la formule d'élaboration du revêtement est réalisée de telle manière que l'exposition de ce revêtement aux rayons ultra-violets permette de provoquer rapidement des liaisons croisées et la polymérisation du revêtement "sur le site", cette transformation relativement complète étant obtenue sans augmenter la température du revêtement au-dessus d'environ 70 à 80°C.

16. Procédé selon la revendication 15, caractérisé en ce que la formule d'élaboration du revêtement et l'exposition aux rayons ultra-violets sont telles qu'elles permettent d'obtenir le durcissement en quelques minutes ou moins pour une épaisseur de revêtement de l'ordre de quelques dizaines de microns (25 μm) à quelques centaines de microns.

17. Procédé selon la revendication 16, caractérisé en ce que la formule d'élaboration du revêtement et l'exposition aux rayons ultra-violets sont telles qu'elles permettent d'obtenir le durcissement par un traitement initial aux rayons ultra-violets se faisant dans l'air, puis ensuite sous une atmosphère inerte, de manière à éviter un "plissage" important.

# FIG.1.

$$O-C = f + g$$

$$T-L = c + d + e$$

$$S' = A + B$$

# FIG.2.

## FIG.3.

Ⓡ

| | |
|---|---|
| OVERCOAT | |
| HARD OVERCOAT | |
| SOFT OVERCOAT | |
| ABSORBER | e' |
| SPACER | d' |
| MIRROR | c' |
| SUBING LAYER | B' |
| PRIMER | P' |
| SUBSTRATE | A' |

OC'

g'

f'

T-L

EP 0 137 760 B1